# EUROPÄISCHE PATENTSCHRIFT

(11) **EP 4 344 858 B1**
(45) Veröffentlichungstag und Bekanntmachung des Hinweises auf die Patenterteilung: **18.06.2025**
(21) Anmeldenummer: 23181177.9
(22) Anmeldetag: 23.06.2023
(51) Int. Cl.: B29C 64/35, B22F 12/00, B33Y 40/20, B22F 10/68, B22F 10/73

(54) **ENTPULVERUNGSVORRICHTUNG ZUM ENTPULVERN VON IM 3D-DRUCKVERFAHREN ENTSTANDENEN OBJEKTEN**
DEPOWDERING DEVICE FOR DEPOWDERING OBJECTS PRODUCED IN 3D PRINTING METHOD
DISPOSITIF DE POUDRAGE POUR LA DÉPOUDRE D'OBJETS FABRIQUÉS EN IMPRESSION 3D

(30) Priorität: 27.09.2022 DE 102022003575
(43) Veröffentlichungstag der Anmeldung: 03.04.2024
(73) Patentinhaber: Solukon Ingenieure GbR, 86165 Augsburg (DE)
(72) Erfinder: HARTMANN, Andreas, 86391 Stadtbergen (DE)
(74) Vertreter: Wiedemann, Markus

(56) Entgegenhaltungen:
- WO-A1-2022/089933
- DE-A1- 102020 128 658
- DE-U1- 202020 004 634
- US-A1- 2017 136 543
- US-A1- 2019 009 338

## Beschreibung

Die vorliegende Erfindung betrifft eine Entpulverungsvorrichtung zum Entpulvern wenigstens eines dreidimensionalen, durch schichtweises Aufbringen und selektives Verfestigen eines pulverförmigen Aufbaumaterials im Rahmen eines Bauprozesses innerhalb eines topfförmigen Baubehälters entstandenen Objekts von unverfestigt verbliebenem Aufbaumaterial, wobei der Baubehälter eine einer Baubehälter-Seitenwandung, Behälteröffnung und einen innerhalb einer Baubehälter-Seitenwandung beweglichen Baubehälter-Boden aufweist, der abhängig vom Baufortschritt eine bestimmte Lage innerhalb der Baubehälter-Seitenwandung einnimmt, gemäß dem Oberbegriff von Anspruch 1.

Zum Aufbauen des Objekts ist in einer Baukammer, welche auch einen Bestandteil der Entpulverungsvorrichtung ausbilden kann, der nach oben offene Baubehälter oder Wechselbehälter angeordnet, was bedeutet, dass er der Baukammer entnommen und dann in die Entpulverungsvorrichtung eingesetzt werden kann, um unverfestigt gebliebenes Pulver von dem Objekt zu entfernen, was auch Entpulvern genannt wird. In dem Baubehälter ist der in vertikaler Richtung entlang der Baubehälter-Seitenwandung bewegbare Baubehälter-Boden angeordnet. Auf dem Baubehälter-Boden kann eine Bauplattform ruhen, auf der das Objekt durch schichtweises Aufbringen und selektives Verfestigen des pulverförmigen Aufbaumaterials aufgebaut worden ist.

Eine gattungsgemäße Entpulverungsvorrichtung ist aus EP 3 068 606 B1 bekannt. Dort ist vorgesehen, dass nach einem Entfernen eines Wechselbehälters aus einer Auspackstation, in welchem der Baubehälter mit dem aufgebauten Objekt aufgenommen ist, auf den Wechselbehälter von außen eine Vibration aufgebracht wird, um ein Ablösen von Pulver von dem Objekt zu unterstützen. Hierzu muss ein Vibrationserzeuger an dem Wechselbehälter angebracht werden.

Weitere Entpulverungsvorrichtungen sind auch aus den Dokumenten DE 10 2020 128658 A1, US 2017/136543 A1, US 2019/009338 A1, und DE 20 2020 004634 U1 bekannt.

Die Aufgabe der Erfindung darin, eine Entpulverungsvorrichtung zur Verfügung zu stellen, welche ein Entpulvern von Objekten mit geringem Aufwand ermöglicht. Diese Aufgabe wird erfindungsgemäß durch die Merkmale von Anspruch 1 gelöst.

### Offenbarung der Erfindung

Das Herstellen des wenigstens einen dreidimensionalen Objekts, wie beispielsweise eines Bauteils oder Modells, welches dann in der erfindungsgemäßen Entpulverungsvorrichtung ausgepackt wird, erfolgt in einem Schichtbauverfahren mit Hilfe von Computerdaten, indem wiederholt dünne Schichten aus losem pulverförmigen Aufbaumaterial auf eine Bauplattform aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher (Laser)Strahlung zu verschmelzen oder zu versintern.

Unter einem Objekt soll daher ein zusammen mit der Bauplattform hergestelltes Werkstück oder Bauteil verstanden werden, oder auch das Werkstück oder Bauteil alleine ohne eine Bauplattform.

Das Auspacken oder die Reinigung des wenigstens einen Objekts von losem, nicht verfestigtem pulverförmigem Aufbaumaterial in der Entpulverungsvorrichtung kann das komplette Auspacken des Objekts aus dem Kuchen losen Aufbaumaterials oder Pulvers beinhalten oder aber lediglich eine Abreinigung von Resten von losem Pulver oder Aufbaumaterial von dem wenigstens einen Objekt und optional von der auch Bauplattform und gegebenenfalls auch von Stützstrukturen, welche nach dem Auspacken noch an dem wenigstens einen Objekt vorhanden sind.

Die Erfindung geht aus von einer Entpulverungsvorrichtung zum Entpulvern wenigstens eines dreidimensionalen, durch schichtweises Aufbringen und selektives Verfestigen eines pulverförmigen Aufbaumaterials im Rahmen eines Bauprozesses innerhalb eines topfförmigen Baubehälters entstandenen Objekts von unverfestigt verbliebenem Aufbaumaterial, wobei der Baubehälter eine einer Baubehälter-Seitenwandung, eine Behälteröffnung und einen innerhalb einer Baubehälter-Seitenwandung beweglichen Baubehälter-Boden aufweist, der abhängig vom Baufortschritt eine bestimmte Lage innerhalb der Baubehälter-Seitenwandung einnimmt, wobei die Entpulverungsvorrichtung wenigstens Folgendes umfasst: eine zur Aufnahme des Baubehälters ausgebildete und eingerichtete Aufnahmeeinrichtung, eine mit der Aufnahmeeinrichtung derart zusammenwirkende Schwenkvorrichtung, dass die Aufnahmeeinrichtung durch die Schwenkvorrichtung um wenigstens eine Achse schwenkbar ist, eine Spanneinrichtung mit wenigstens einem Spannelement zum Spannen des Baubehälters an oder in der Aufnahmeeinrichtung. Der Begriff "Spannen" soll hier breit verstanden werden und jegliches Fixieren oder definiertes Halten des Baubehälters an oder in der Aufnahmeeinrichtung umfassen.

Die Erfindung ist dadurch gekennzeichnet, dass die Spanneinrichtung ausgebildet und eingerichtet ist, um in einer Einspannstellung von dem Baubehälter insbesondere ausschließlich den Baubehälter-Boden an dem wenigstens einem Spannelement durch Körperkontakt des wenigstens einen Spannelements mit dem Baubehälter-Boden zu spannen und um in einer Entspannstellung den Baubehälter-Boden von dem wenigstens einem Spannelement zu entspannen, und dass wenigstens ein, mit dem wenigstens einem Spannelement der Spanneinrichtung durch direkten oder indirekten Körperkontakt derart verbundener Vibrationserzeuger vorgesehen ist, dass von dem Vibrationserzeuger erzeugte Schwingungen und/oder erzeugtes Klopfen auf das wenigstens eine Spannelement mittels Körperschallleitung übertragen werden. Insbesondere ist die Spanneinrichtung ausgebildet und eingerichtet, dass der Baubehälter bevorzugt ausschließlich durch das wenigstens eine Spannelement an oder in der Aufnahmeeinrichtung gespannt werden kann.

Unter Körperschall sollen Vibrationen, Schwingungen oder Stöße verstanden werden, welche sich im Wesentlichen vollständig innerhalb eines Festkörpers oder entlang von sich einander körperlich kontaktierenden Festkörpern ausbreiten, wie in dem wenigstens einen Spannelement, das mit dem Vibrationserzeuger in direktem oder indirektem Körperkontakt steht. Indirekter Körperkontakt meint, dass zwischen dem Vibrationserzeuger und wenigstens einen Spannelement noch wenigstens ein weiterer Festkörper angeordnet sein kann, der dann den Vibrationserzeuger und das wenigstens eine Spannelement (direkt) kontaktiert. Daher unterscheidet sich der Körperschall von Luftschall, bei dem sich Vibrationen oder Schwingungen in Gasen ausbreiten.

Die Erfindung beruht daher auf dem Gedanken, dass der von dem Vibrationserzeuger insbesondere ausschließlich in der Einspannstellung des wenigstens einen Spannelements erzeugte Körperschall auf das wenigstens eine Spannelement übertragen und dann von diesem dann gezielt auf den von diesem gespannten Baubehälter-Boden übertragen wird, mit welchem es in der Einspannstellung in insbesondere direktem Körperkontakt steht.

Da die Bauplattform, auf welcher das Objekt aufgebaut wird, mit dem Baubehälter-Boden in der Regel zumindest vorrübergehend und unter Körperkontakt fest verbunden (beispielsweise verschraubt) ist, kann eine Übertragung des Körperschalls auf die Bauplattform und von dort auf das Objekt stattfinden. Die Schwingungen, zu denen das Objekt dann durch den (mittelbar) von dem Vibrationserreger übertragenen Körperschall angeregt ist, tragen zu einem Lösen von Resten von losem Pulver oder Aufbaumaterial von dem Objekt und auch von der auch Bauplattform und gegebenenfalls auch von Stützstrukturen bei, welche an dem wenigstens einen Objekt vorhanden sind.

Dies hat den Vorteil einer gezielten und konzentrierten Anregung des Baubehälter-Bodens, weil der vom Vibrationserzeuger erzeugte Körperschall über das wenigstens eine Spannelement im Wesentlichen nur auf den Baubehälter-Boden übertragen wird. Demgegenüber findet keine oder kaum eine Körperschallanregung von weiteren Bauelementen oder Komponenten der Aufnahmeeinrichtung oder der Schwenkvorrichtung statt.

Dabei hat das wenigstens eine Spannelement eine vorteilhafte Doppelfunktion, indem es zum einen zum Spannen des Baubehälters in oder an der Aufnahmevorrichtung und zum andern als körperliches Leitelement für den vom Vibrationserzeuger erzeugten Körperschall dient. Mit dem Spannen des Baubehälter-Bodens an der Aufnahmevorrichtung durch das wenigstens eine Spannelement wird daher gleichzeitig der Vibrationserreger mit dem Baubehälter-Boden in einem einzigen Schritt körperschalleitend verbunden. Dadurch kann auf ein gesondertes Anbringen des Vibrationserregers an dem Baubehälter-Boden wie auch auf dessen gesonderte Demontage von dem Baubehälter-Boden beim Entfernen des Baubehälters aus der Aufnahmevorrichtung verzichtet werden.

In den Unteransprüchen sind bevorzugte Weiterbildungen der Erfindung angegeben.

Besonders bevorzugt weist die Aufnahmeeinrichtung einen Aufnahmekorb zur Aufnahme des Baubehälters und einen Boden auf, wobei der Aufnahmekorb mit einer Seite des Bodens verbunden und die Spanneinrichtung im Wesentlichen auf der anderen, von der einen Seite wegweisenden Seite des Bodens angeordnet ist.

Gemäß einer Weiterbildung kann der Boden wenigstens eine Durchgangsöffnung aufweisen, durch welche das wenigstens eine Spannelement wenigstens in der Einspannstellung ragt, um den Baubehälter-Boden durch Körperkontakt spannen zu können.

Um zu vermeiden, dass der entlang des wenigstens einen Spannelements geleitete Körperschall von dem Boden und damit auch von weiteren Komponenten der Aufnahmeeinrichtung aufgenommen wird, kann das wenigstens eine Spannelement die wenigstens eine Durchgangsöffnung des Bodens kontaktlos durchragen. Diese Maßnahme trägt daher ebenfalls zu einer Konzentration des Körperschalls in dem Baubehälter-Boden bei.

Besonders bevorzugt kann die Spanneinrichtung eine durch wenigstens einen Aktuator relativ zu dem Boden bewegliche Baueinheit darstellen, an oder in welcher der wenigstens den Vibrationserzeuger und das wenigstens eine Spannelement miteinander körperschalleitend in Verbindung stehen. Der Aktuator kann sich beispielsweise einerseits an der Baueinheit und andererseits an einem Rahmen oder an einem Gehäuse der Entpulverungsvorrichtung abstützen.

Auch kann der Aktuator wenigstens einen Pneumatikzylinder umfassen. Solche Pneumatikzylinder weisen im Betrieb ein innerhalb eines Pneumatikzylindergehäuses geführten und durch ein Luftkissen belasteten Kolben auf. Dieses Luftkissen stellt dann ein Dämpfungselement in Bezug auf den Körperschall dar, welcher von dem Vibrationserreger in die Baueinheit emittiert wird.

Auch kann die Baueinheit weiterhin eine Montageplatte umfassen, auf welcher wenigstes der Vibrationserzeuger und das wenigstens eine Spannelement angeordnet sind. Optional können auf der Montageplatte weiterhin Schwingungsentkopplungsmittel derart angeordnet sein, dass sie zu dem Boden weisen.

Besonders bevorzugt kann der Aktuator durch eine Steuerung derart gesteuert sein, dass der Aktuator die Baueinheit zwischen einer an den Boden angenäherten ersten Lage, in welcher das wenigstens eine Spannelement die Einspannstellung einnehmen kann oder zum Einnehmen der Einspannstellung oder der Entspanntstellung bereit ist, und einer von dem Boden entfernten zweiten Lage bewegen kann, in welcher das wenigstens eine Spannelement die Entspannstellung einnimmt. In der an den Boden angenäherten ersten Lage der Baueinheit kann dann das Spannen des Baubehälter-Bodens durch das wenigstens eine Spannelement erfolgen sowie die körperschalleitende Verbindung des Vibrationserreger mit dem Baubehälter-Boden in einem einzigen Schritt zustande kommen.

Insbesondere können, wenn die Baueinheit in die an den Boden angenäherte erste Lage gesteuert ist, die Schwingungsentkopplungsmittel in Kontakt mit der anderen Seite des Bodens treten. Die Schwingungsentkopplungsmittel können wenigstens ein elastisches Element, insbesondere aus einem Elastomer umfassen. Schwingungsentkopplungsmittel können eine Ausbreitung des Körperschalls von der Baueinheit auf den Boden der Aufnahmeeinrichtung ver- oder behindern, insbesondere dann, wenn sich die Baueinheit auf dem Boden in einer weiter unten beschriebenen Kopflage des Baubehälters abstützt.

Auch kann der Vibrationserzeuger durch eine Steuerung derart gesteuert sein, dass er wenigstens in der Einspannstellung des wenigstens einen Spannelements aktiviert wird, um Körperschall auf das wenigstens eine Spannelement zu übertragen. Bevorzugt erzeugt der Vibrationserzeuger periodische Schwingungen im Ultraschallbereich bzw. Ultraschallschwingungen. Möglich sind aber periodische Schwingungen jeglicher Frequenz. Alternativ oder zusätzlich kann der Vibrationserzeuger auch als Rüttler oder Klopfer ausgebildet sein, um das wenigstens eine Spannelement durch Klopfen stoßartig anzuregen. Das Klopfen kann einmalig, wiederholt unregelmäßig oder auch periodisch erfolgen.

Auch kann die Entpulverungsvorrichtung eine insbesondere pulverdichte Entpulverungskammer umfassen, in welcher die Aufnahmeeinrichtung angeordnet ist.

Gemäß einer Weiterbildung kann die Aufnahmeeinrichtung einen an dem Aufnahmekorb beweglich gelagerten Deckel aufweisen, wobei in einer abgehobenen Stellung des Deckels der Baubehälter in dem Aufnahmekorb in einer im Wesentlichen aufrechten Lage aufgenommen ist, in welcher die Behälteröffnung im Wesentlichen nach oben weist, und aus dem Aufnahmekorb entnommen werden kann, und in einer abgesenkten Stellung des Deckels die Behälteröffnung des Baubehälters und/oder eine Öffnung des Aufnahmekorbs verschlossen werden kann. Der Aufnahmekorb kann dann nicht pulverdicht sein. Gemäß einer Alternative kann der Aufnahmekorb pulverdicht sein und der Deckel dann den Aufnahmekorb pulverdicht verschließen.

Diese Ausführung kann für einen Baubehälter geeignet sein, bei welchen die Behälteröffnung (nur) vor dem Beladen der Aufnahmeeinrichtung unbedeckt oder offen ist und dann nach dem Laden in der Aufnahmeeinrichtung von dem Deckel in der abgesenkten Stellung bedeckt wird, damit der Baubehälter dann (pulver-)dicht ist.

Insbesondere kann der Deckel durch wenigstens einen Aktuator wie beispielsweise einen Elektromotor rotatorisch und/oder translatorisch antreibbar und dadurch relativ zum Aufnahmekorb beweglich sein, wobei der Aktuator beispielsweise von einer elektronischen Steuerung gesteuert ist.

Gemäß einer Alternative kann der Baubehälter vor dem Laden oder beim Laden in die Aufnahmeeinrichtung bereits mit einem Deckel versehen sein, welcher die Behälteröffnung dicht verschließt. Die Aufnahmeeinrichtung kann dann auch ausgebildet und eingerichtet sein, um in diesem bereits dichten Zustand den Baubehälter samt Deckel aufzunehmen.

Gemäß einer besonders bevorzugten Ausführungsform ist die Schwenkvorrichtung derart ausgebildet und durch eine Steuerung derart gesteuert, dass die Aufnahmevorrichtung zwischen einer für ein Be- und Entladen des Baubehälters vorgesehenen Be- und Entladestellung, in welcher der Deckel im Wesentlichen nach oben weist, und einer für ein Entleeren des Baubehälters von unverfestigtem Aufbaumaterial vorgesehenen Entleerungsstellung, in welcher der Deckel im Wesentlichen nach unten in Richtung Schwerkraft weist, wenigstens einmal um die wenigstens eine Achse schwenkbar ist.

Um das von dem Objekt und/oder von der Bauplattform abgelöste unverfestigte Aufbaumaterial insbesondere in der Entleerungsstellung aus dem Baubehälter zu entfernen, kann der Deckel mit wenigstens einer Durchgangsöffnung versehen sein, durch welche dann das Aufbaumaterial aus dem Baubehälter infolge der Wirkung der Schwerkraft und/oder durch Absaugung nach außen abfließen kann.

Besonders bevorzugt weist die Entpulverungsvorrichtung ein Gehäuse auf, in welchem die Entpulverungskammer ausgebildet ist. Die Entpulverungskammer ist insbesondere pulver- und/oder gasdicht ausgeführt, aber durch wenigstens eine beispielsweise durch ein Verschlusselement zu öffnende und verschließbare Öffnung der Entpulverungskammer können Baubehälter zu- und abgeführt werden.

Gemäß einer Weiterbildung kann die Entpulverungskammer einen trichterförmigen Boden aufweisen, welcher derart angeordnet ist, dass er das von dem wenigstens einen Objekt infolge der oder unter Zuhilfenahme der Schwerkraftwirkung durch die wenigstens eine Durchgangsöffnung des Deckels hindurch nach unten abfließende unverfestigt verbliebene Aufbaumaterial aufnehmen kann. Dieses dann in dem trichterförmigen Boden befindliche Aufbaumaterial kann dann beispielsweise durch eine in einem Trichterhals des Bodens angeordnete, verschließbare Öffnung aus der Entpulverungskammer herausgeführt und für einen weiteren Bauprozess wiederverwendet werden.

In besonders zu bevorzugender Weise kann eine Belüftungseinrichtung vorgesehen sein, durch welche die Entpulverungskammer durch eine Strömung von Gas, insbesondere von Außenluft durchströmbar ist, welche über eine Zufuhröffnung des Gehäuses von außen in die Entpulverungskammer zugeführt und mittels einer Ausfuhröffnung des Gehäuses aus der Entpulverungskammer ausführbar ist, wobei die Belüftungseinrichtung ausgebildet ist, dass das Gas um den in der Schwenkvorrichtung aufgenommenen Baubehälter herumströmt.

Insbesondere sind die oben beschriebenen Vorgänge und Bewegungen durch eine elektronische Steuerung oder durch mehrere elektronische Steuerungen automatisch gesteuert, die softwaremäßig entsprechend programmiert sind.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig. 1: eine perspektivische Ansicht einer bevorzugten Ausführungsform einer Entpulverungsvorrichtung nach der Erfindung;
- Fig. 2: eine perspektivische Ansicht der Entpulverungsvorrichtung von Fig. 1 in einer Situation, in der ein Baubehälter mit einem darin aufgenommenen Objekt in eine Entpulverungskammer und dort in aufrechter Lage in eine in eine Be- und Entladestellung gestellte Aufnahmeeinrichtung geladen wird, wobei ein Deckel der Aufnahmeeinrichtung in eine hochgeklappte Stellung gesteuert ist;
- Fig. 3: eine perspektivische Ansicht der Entpulverungsvorrichtung von Fig. 1 in einer Situation, in welcher der Deckel in eine den Baubehälter verschließende Arbeitsstellung gebracht worden ist und die Aufnahmeeinrichtung mit dem darin aufgenommenen Baubehälter durch eine Schwenkvorrichtung von der aufrechten Lage in eine Entleerungsstellung (Kopflage) verschwenkt worden ist;

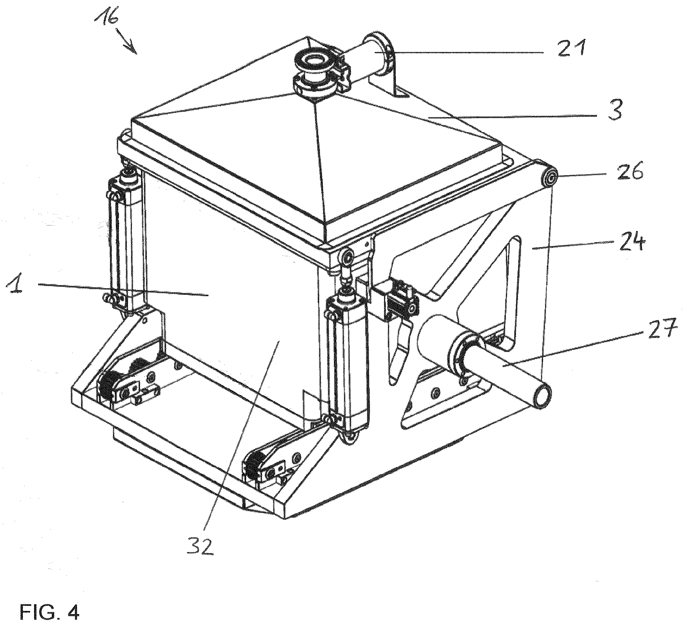

- Fig. 4: eine perspektivische Ansicht der Aufnahmeeinrichtung der Auspackvorrichtung von Fig. 1 mit dem Deckel in Arbeitsstellung;
- Fig. 5A: eine Schnittdarstellung der Aufnahmeeinrichtung von Fig. 4 in einer Situation, in der ein Baubehälter-Boden des Baubehälters von einer Spanneinrichtung der Aufnahmeeinrichtung entspannt ist;
- Fig. 5B: eine Schnittdarstellung der Aufnahmeeinrichtung von Fig. 4 in einer Situation, in welcher der Baubehälter-Boden des Baubehälters durch die Spanneinrichtung gespannt ist;
- Fig. 6: eine Teilschnittdarstellung der Aufnahmeeinrichtung von Fig. 4 in einer Situation, in welcher der Baubehälter-Boden des Baubehälters durch die Spanneinrichtung gespannt ist und sich die Aufnahmeeinrichtung in der Entleerungsstellung (Kopflage) befindet.

### Beschreibung des Ausführungsbeispiels

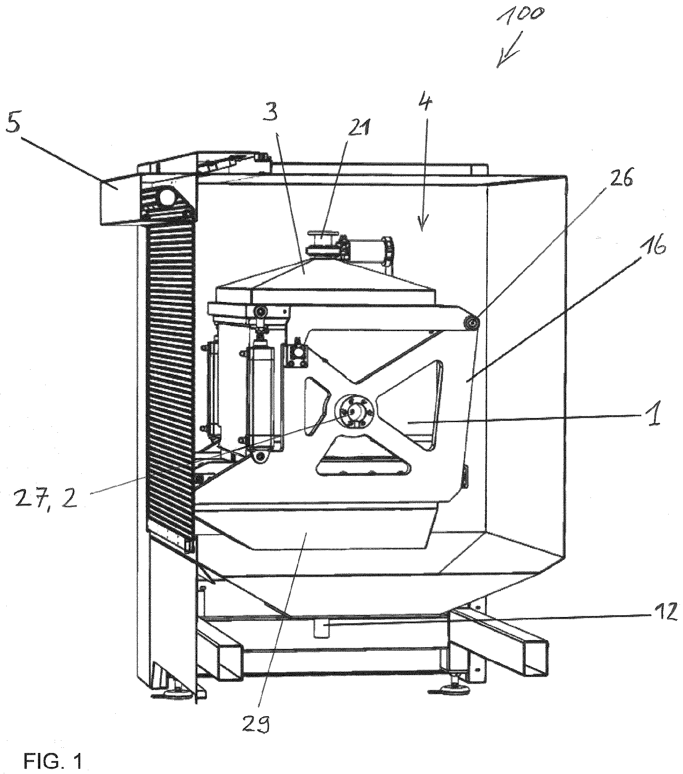

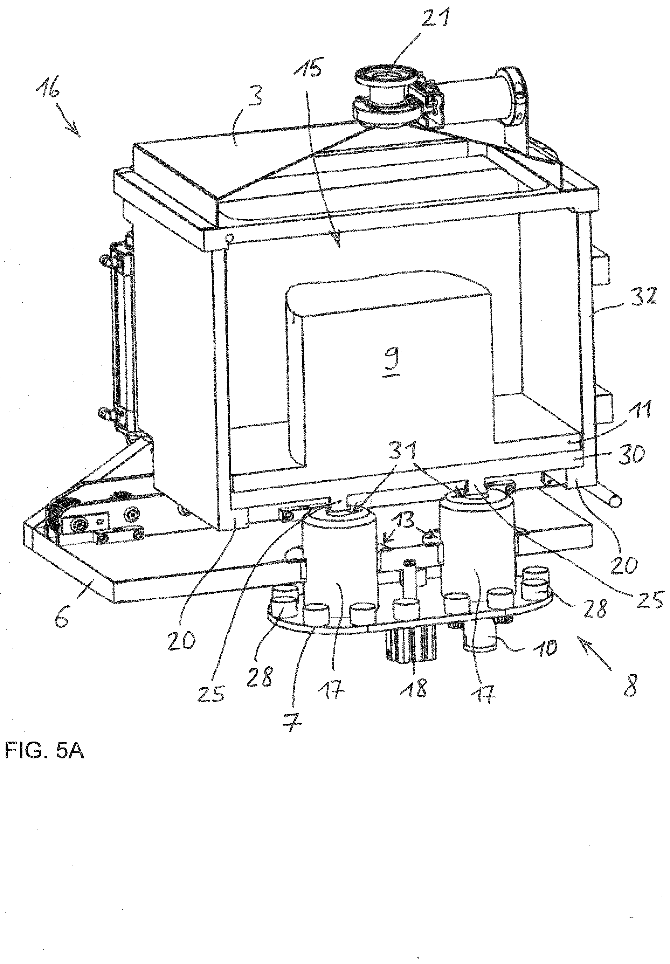

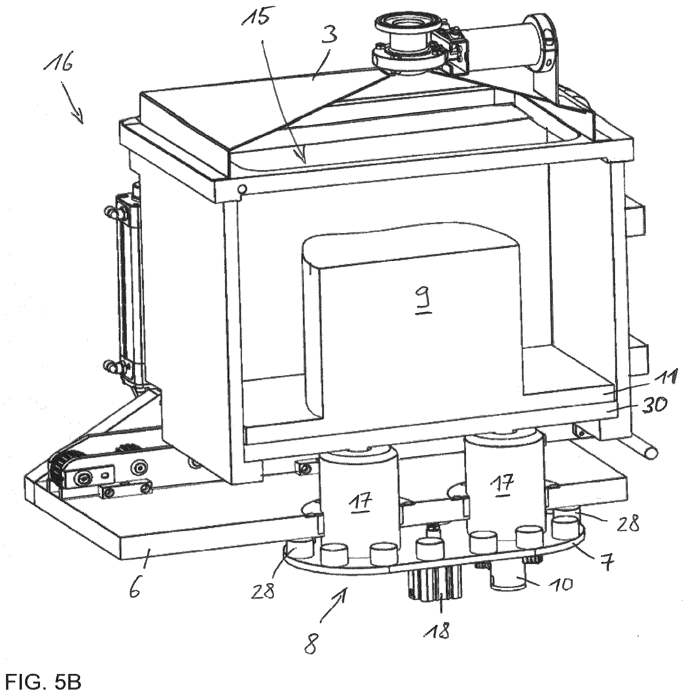

**Fig. 1** zeigt eine perspektivische Ansicht einer bevorzugten Ausführungsform einer Entpulverungsvorrichtung 100 zum Entpulvern hier beispielsweise eines dreidimensionalen, durch schichtweises Aufbringen und selektives Verfestigen eines pulverförmigen Aufbaumaterials im Rahmen eines Bauprozesses entstandenen Objekts 9 (Fig. 5A, 5B) von unverfestigt verbliebenem Aufbaumaterial nach der Erfindung.

Das Objekt 9 ist in einer hier nicht gezeigten Bauvorrichtung, welche eine pulver- und gasdichte Baukammer beinhaltet durch schichtweises Aufbringen und selektives Verfestigen eines pulverförmigen Aufbaumaterials z.B. von Kunststoff- oder Metallpulver auf eine Bauplattform 11 im Rahmen eines Bauprozesses entstanden, welcher in einer Atmosphäre innerhalb der Baukammer stattfindet, welche beispielsweise wenigstens ein inertes Schutzgas enthält. In der Baukammer wird dazu ein Baubehälter 1 angeordnet, in welchem der Bauprozess des Objekts 9 stattfindet und wie er auch dann nach Beendigung des Bauprozesses in der Entpulverungsvorrichtung 100 angeordnet wird, Der Baubehälter 1 ist beispielsweise topfförmig und weist eine Behälteröffnung 15, eine Baubehälter-Seitenwandung 32 und einen in Bezug auf die Baubehälter-Seitenwandung 32 vertikal beweglichen Baubehälter-Boden 30 auf, welcher abhängig vom Baufortschritt eine bestimmtes Niveau innerhalb der Baubehälter-Seitenwandung 32 einnimmt. Die Behälteröffnung 15 weist im Laufe des Bauprozesses beispielsweise bezogen auf die Gebrauchslage des Baubehälters 1 beim Bau des Objekts 9 nach oben.

Durch Zufuhr von pulverförmigem Material in den Baubehälter 1 und selektive Verfestigung z.B. durch Schweißen, Sintern der jeweils aufgetragenen Schicht beispielsweise mittels Laserstrahl wird das Objekt 9 in dem Baubehälter 1 schichtweise aufgebaut. Hier wird beispielsweise ein Objekt 9 auf der Bauplattform 11 aufgebaut und bildet dann mit der Bauplattform 11 (zunächst) eine Einheit. Später wird dann das Objekt 9 von der Bauplattform 11 getrennt, welche dann für einen Bau eines weiteren Objekts genutzt werden kann.

Der Baubehälter 1 wird auch als Wechselbehälter oder Job-Box bezeichnet. In **Fig. 5A** und **Fig. 5B** ist eine bevorzugte Ausführungsform des Baubehälters 1 gezeigt, welcher den innerhalb der Baubehälter-Seitenwandung 32 axial beweglichen Baubehälter-Boden 30 aufweist, welcher beim Bauprozess abhängig vom Baufortschritt ein bestimmtes vertikales Niveau innerhalb der Baubehälter-Seitenwandung 32 einnimmt. Zum Beginn des Bauprozesses befindet sich der Baubehälter-Boden 30 in einer oberen Position nahe der Behälteröffnung 15 und wird dann mit fortschreitendem Bauprozess immer weiter nach unten verschoben, bis er eine unterste Position einnimmt, in welcher er in etwa bündig mit den unteren Rändern der Baubehälter-Seitenwandung 32 ist.

Die Entpulverungsvorrichtung 100 beinhaltet ein Gehäuse mit einer Auspackkammer 4, in welcher das Objekt 9 wenigstens teilweise von umgebendem und/oder von in Öffnungen oder Kanälen des Objekts 9 verbliebenem, nicht verfestigtem pulverförmigem Aufbaumaterial im Rahmen eines Entpulverungsverfahrens entpulvert oder gereinigt wird.

Weiterhin umfasst die Entpulverungsvorrichtung 100 eine Aufnahmeeinrichtung 16 mit einem Deckel 3, eine Schwenkvorrichtung 2 und einen beweglichen Rollladen 5, um ein Be- und Entladen des Baubehälters 1 in Bezug auf die Auspackkammer 4 zu ermöglichen.

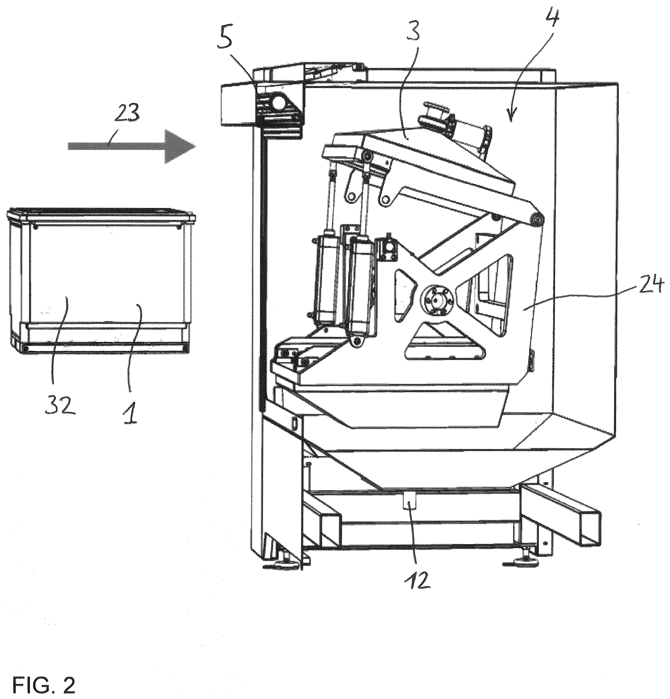

Die Aufnahmeeinrichtung 16 weist neben dem Deckel 3 hier beispielsweise einen durch eine seitliche Korböffnung seitlich offenen und durch eine obere Korböffnung oben offenen Aufnahmekorb 24 auf, in welchem der Baubehälter 1 unter geringem Spiel in einer im Wesentlichen aufrechten Lage aufgenommen werden kann, wobei dann die Behälteröffnung 15 des Baubehälters 1 bevorzugt nach oben weist. Der Transport des Baubehälters 1 in die Auspackkammer 4 und dort in die Aufnahmeeinrichtung 16 erfolgt beispielsweise horizontal in der durch den Pfeil 23 in **Fig. 2** symbolisierten horizontalen Richtung, beispielsweise durch eine hier nicht gezeigte äußere Rollenbahn. Diese äußere Rollenbahn kann in der Aufnahmeeinrichtung durch eine separate innere Rollenbahn auf demselben Niveau fortgesetzt sein.

Der Deckel 3 und der Aufnahmekorb 24 sind beispielsweise im Bereich der oberen Korböffnung des Aufnahmekorbs 24 um eine erste beispielsweise horizontale Schwenkachse 26 relativ zueinander schwenkbar gelagert. Für diese Relativbewegung ist ein durch die elektronische Steuerung koordiniert gesteuerter erster Schwenkaktuator vorgesehen. Mit anderen Worten kann mittels des ersten Schwenkaktuators der Deckel 3 gegenüber dem stationären Aufnahmekorb 24 und dem in ihm aufgenommenen Baubehälter 1 in eine abgehobene Stellung verschwenkt werden, in welcher ein Be- und Entladen eines Baubehälters möglich ist und in der der Deckel auch von der Baubehälteröffnung 15 abgehoben ist, wenn ein solcher in dem Aufnahmekorb 24 aufgenommen ist. Fig. 2 zeigt die Be- und Entladestellung der Aufnahmeeinrichtung 16 bzw. des Deckels 3, welcher dann von dem Aufnahmekorb 24 nach oben geklappt ist.

Andererseits kann der Deckel auch in eine abgesenkte Stellung oder Arbeitsstellung verschwenkt werden, in welcher er die Baubehälteröffnung 15 dicht verschließt. Alternativ oder zusätzlich könnten der Deckel 3 und der Aufnahmekorb 24 auch eine translatorische Bewegung relativ zueinander ausführen, um die Be- und Entladestellung einzunehmen, sowie die Arbeitsstellung.

Die Aufnahmeeinrichtung 16 ist insgesamt durch eine Schwenkvorrichtung 2 beispielsweise um eine zweite horizontale Schwenkachse 27 durch Antrieb eines durch die Steuerung koordiniert gesteuerten zweiten Schwenkaktuators in beliebige Winkelstellungen zwischen 0 Grad und 360 Grad schwenkbar, wenigstens einmal und vorzugsweise mehrmals hintereinander.

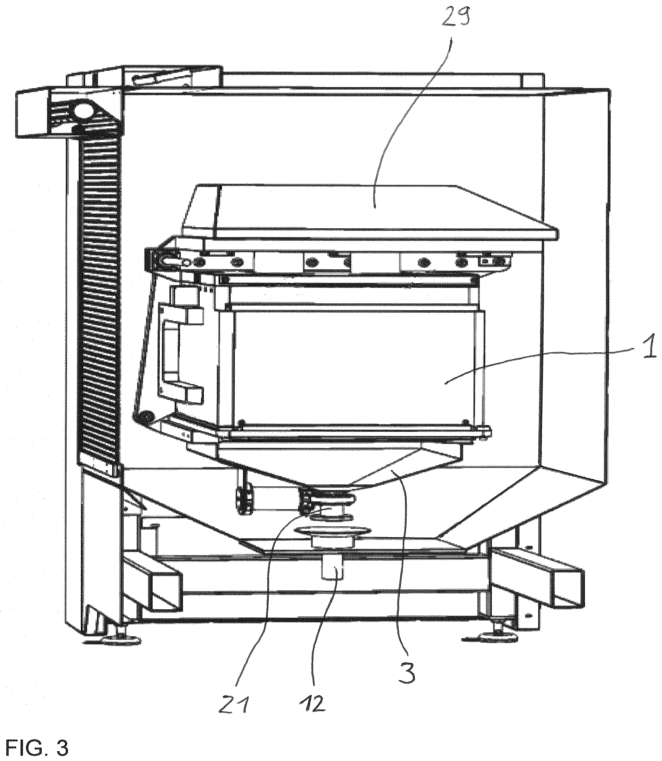

Der Deckel 3 weist einen hier beispielsweise pyramidenförmigen Deckelboden 19 auf, mit einer Austrittsöffnung 21 an seinem Scheitelpunkt, an welche beispielsweise ein Saugschlauch einer Absaugvorrichtung angeschlossen werden kann. Andererseits könnte das von dem Objekt 9 abgereinigte Aufbaumaterial durch die Austrittsöffnung 21 auch allein schwerkraftbedingt abfließen, wenn sich die Aufnahmeeinrichtung 16 in der in **Fig. 3** gezeigten Entleerungsstellung (Kopflage) befindet.

Folglich kann der Deckel 3 relativ zum Aufnahmekorb 24 durch den ersten Schwenkaktuator um die erste Schwenkachse 26 zwischen der vom Aufnahmekorb 24 bzw. vom Baubehälter 1 abgehobenen Stellung und der Arbeitsstellung schwenkbar angetrieben werden, in welcher der Deckel 3 die Behälteröffnung 15 des in dem Aufnahmekorb 24 aufgenommenen Baubehälters 1 insbesondere pulverdicht verschließt.

Die Begriffe "oben" und "unten" bzw. "aufrecht" im Sinne der hier vorliegenden Beschreibung beziehen sich auf die Gebrauchslage der Entpulverungsvorrichtung 100.

Wie bereits oben angedeutet, zeigt **Fig. 2** zeigt eine Seitenansicht der Entpulverungsvorrichtung 100 von **Fig. 1** in einer Situation, in welcher der Baubehälter 1 mit dem darin aufgenommenen Objekt 9 in die Auspackkammer 4 und dort in die sich in ihrer Ausgangslage befindliche Aufnahmeeinrichtung 16 z.B. über den geöffneten Rollladen 5 der Auspackkammer 4 geladen wird. An dem Objekt 9 haftet dann noch bei dem oben beschriebenen Bauprozess unverfestigt verbliebenes Aufbaumaterial.

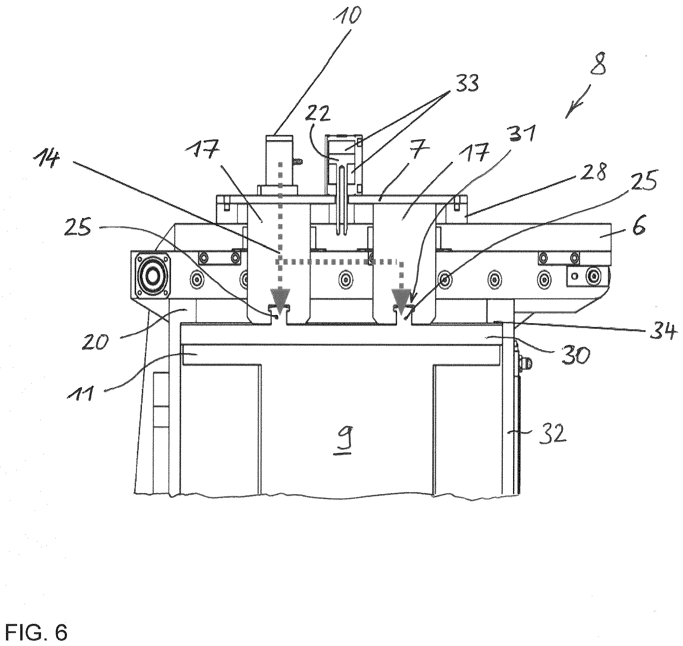

Hierzu wird der Deckel 3 relativ zum Aufnahmekorb 24 beispielsweise nach oben in die abgehobene Stellung geklappt. Dann wird der Baubehälter 1 wie durch den Pfeil 23 in **Fig. 2** symbolisiert über eine seitliche Aufnahmeöffnung des Aufnahmekorbs 24 in den Aufnahmekorb 24 beispielsweise stehend oder aufrecht (Behälteröffnung 15 weist nach oben) eingesetzt und dort beispielsweise durch eine in **Fig. 5a****,** **Fig. 5B** und **Fig. 6** gezeigte Spanneinrichtung 29 der Aufnahmeeinrichtung 16 im Aufnahmekorb 24 gespannt.

Der Baubehälter 1 befindet sich in dem Aufnahmekorb 16 dann in einer im Wesentlichen aufrechten Lage, in welcher die Behälteröffnung 15 im Wesentlichen nach oben, d.h. gegen die Richtung der Schwerkraft weist. Im Wesentlichen aufrechte Lage bedeutet, dass diese aufrechte Lage auch von einer rein vertikalen Lage um ein bestimmtes Maß abweichen kann.

Dann wird der Deckel 3 derart nach unten in die Arbeitsstellung verschwenkt, dass er die Behälteröffnung 15 des Baubehälters 1 pulverdicht verschließt. Damit dies eintreten kann, weist beispielsweise ein Boden 6 des Aufnahmekorbs 24 von dem in der Arbeitsstellung befindlichen Deckel 3 einen vertikalen Abstand auf, welcher in etwa der Höhe des Baubehälters 1 entspricht. In der Arbeitsstellung des Deckels 3 kann daher loses Aufbaumaterial aus dem Baubehälter 1 lediglich durch die im Deckel 3 ausgebildete Austrittsöffnung 21 fließen.

Die Spanneinrichtung 29 weist beispielsweise Spannzylinder 17 mit Spannöffnungen 31 auf, in welche am Baubehälter-Boden 30 ausgebildete Spannzapfen 25 in einer weiter unten beschriebenen Einspannstellung der Spanneinrichtung 29 formschlüssig eingreifen können, um den Baubehälter 1 im Aufnahmekorb 24 zu fixieren. Zum Entspannen des Baubehälters 1 aus dem Aufnahmekorb werden dann die Spannzapfen 25 des Baubehälter-Bodens 30 von den Spannöffnungen 31 der Spannzylinder 17 in einer weiter unten beschriebenen Entspannstellung der Spanneinrichtung 29 gelöst.

Besonders bevorzugt weist die Aufnahmeeinrichtung 16 einen Boden 6 auf, wobei der Aufnahmekorb 24 mit einer Seite des Bodens 6 verbunden und die Spanneinrichtung 29 im Wesentlichen auf der anderen, von der einen Seite wegweisenden Seite des Bodens 6 angeordnet ist.

Besonders bevorzugt stellt die Spanneinrichtung 29 eine durch einen Aktuator, hier beispielsweise einen Pneumatikzylinder 18 relativ zu dem Boden 6 bewegliche Baueinheit dar, wie in den **Figuren 5A****,** **5B** und **6** gezeigt ist. Diese Baueinheit 8 umfasst eine Andockplatte 7, auf welcher ein Vibrationserzeuger 10 und die Spannzylinder 17 und zu dem Boden 6 weisende Schwingungsentkopplungsmittel 28, hier beispielsweise in Form von Gummizylindern angeordnet sind. Der Pneumatikzylinder 18 stützt sich hier beispielsweise einerseits an der Baueinheit 8 und andererseits an einem Gehäuse der Auspackkammer 4 ab.

Da die Andockplatte 7 den Vibrationserzeuger 10 durch Körperkontakt mit den Spannzylindern 17 hier beispielsweise indirekt verbindet, können Schwingungen, die der Vibrationserzeuger 10 erzeugt, als Körperschall, d.h. durch sich in Festkörpern ausbreitende Schwingungen durch die Andockplatte 7 hindurch in die Spannzylinder 17 geleitet. Der Vibrationserzeuger 10 wird hierzu beispielsweise von der hier nicht gezeigten elektronischen Steuerung koordiniert gesteuert, welche auch die weiter oben beschriebenen Aktionen oder Funktionen ausführt.

Der Boden 6 der Aufnahmeeinrichtung 16 weist Durchgangsöffnungen 13 auf, durch welche die Spannzylinder 17 hier beispielsweise auch in der Entspannstellung **(****Fig. 5A****)** und in der Einspannstellung **(****Fig. 5B****,** **Fig. 6****)** der Spanneinrichtung 29 bzw. der Baueinheit 8 vorzugsweise kontaktlos mit dem Boden 6 ragen.

Besonders bevorzugt ist der Pneumatikzylinder 18 von der Steuerung derart gesteuert, dass er die Baueinheit 8 bzw. die Spanneinrichtung 29 zwischen einer an den Boden 6 der Aufnahmeeinrichtung 16 angenäherten ersten Lage **(****Fig. 5B** **Fig. 6****),** in welcher die Spannzylinder 17 die Einspannstellung in Bezug zu den Spannzapfen 25 des Baubehälter-Bodens 30 einnehmen, und einer von dem Boden 6 entfernten zweiten Lage bewegen kann, in welcher die Spannzylinder 17 die Entspannstellung **(****Fig. 5A****)** einnehmen. Besonders bevorzugt bewegt der Pneumatikzylinder 18 die Baueinheit 8 bzw. die Spanneinrichtung 29 relativ zu dem Boden 6 der Aufnahmeeinrichtung 16 senkrecht.

In der an den Boden 6 angenäherten ersten Lage der Baueinheit 8 erfolgt daher das Spannen des Baubehälter-Bodens 30 durch die Spannzylinder 17 an der Spanneinrichtung 29, wobei dabei automatisch eine körperschalleitende Verbindung des Vibrationserzeugers 10 mit dem Baubehälter-Boden 30 in einem einzigen Schritt zustande kommt **(****Fig. 5B** **Fig. 6****).** In der Entspannstellung wird dann der körperschalleitende Kontakt zwischen den Spannzylindern 17 und den Spannzapfen 25 des Baubehälter-Bodens 30 bevorzugt gelöst **(****Fig. 5A****).**

Die in **Fig. 5A** gezeigte Entspannstellung wird beispielsweise in der Be- und Entladestellung zu Be- und Entladen des Baubehälters 1 eingenommen, die Einspannstellung beispielsweise wenigstens dann, wenn unverfestigtes Aufbaumaterial von dem Objekt 9 bzw. von der Bauplattform 11 hier durch die vom Vibrationserzeuger 10 erzeugten und auf das Objekt 9 übertragenen Körperschall entfernt werden soll, insbesondere auch dann, wenn die Aufnahmeeinrichtung 16 die in **Fig. 3** und in **Fig. 6** gezeigte Entleerungsstellung (Kopflage) einnimmt.

Der Vibrationserzeuger 10 wird durch die Steuerung bevorzugt derart gesteuert, dass er lediglich in der Einspannstellung aktiviert wird, um Schwingungen zu erzeugen. Diese Schwingungen werden dann als Körperschall über die Spannzylinder 17, die in den dortigen Spannöffnungen 31 eingespannten Spannzapfen 25, den Baubehälter-Boden 30 auf die mit dem Baubehälter-Boden 30 (vorrübergehend) fest verbundene Bauplattform 11 und von dort auf das Objekt 9 übertragen, wie die Pfeile in **Fig. 6** andeuten. Bevorzugt erzeugt der Vibrationserzeuger 10 Schwingungen im Ultraschallbereich. Möglich ist aber auch jegliche andere Erregungsfrequenz. Die Schwingungsanregung trägt dazu bei, dass das unverfestigt gebliebene Aufbaumaterial von dem Objekt 9 abfließt bzw. dass es aus Öffnungen und Kanälen des Objekts 9 herausfließt.

Wenn die Aufnahmeeinrichtung 16 in die in **Fig. 3** und in **Fig. 6** gezeigte Entleerungsstellung (Kopflage) gestellt ist, trägt außerdem die Wirkung der Schwerkraft dazu bei, dass das Aufbaumaterial nach unten in den trichterförmigen Deckelboden 19 abfließt und über die Austrittsöffnung 21 in die Auspackkammer 4. Bevorzugt erfolgt daher die Aktivierung des Vibrationserzeugers 10 durch die Steuerung, wenn oder nachdem die Aufnahmeeinrichtung 16 in die in **Fig. 3** und in **Fig. 6** gezeigte Entleerungsstellung (Kopflage) gestellt ist.

Um zu vermeiden, dass der entlang der Spannzylinder 17 geleitete Körperschall den Boden 6 und damit auch weitere Komponenten der Aufnahmeeinrichtung 16 erfasst, durchragen die Spannzylinder 17 Durchgangsöffnungen 13 des Bodens 6 kontaktlos mit dem Boden 6.

Gemäß **Fig. 6** stützt sich in der Entleerungsstellung der Aufnahmeeinrichtung 29 bevorzugt die Baueinheit 8 über die Schwingungsentkopplungsmittel 28 an der anderen Seite des Bodens 6 ab. Diese (mechanisch weichen) Schwingungsentkopplungsmittel 28, die beispielsweise aus einem Elastomer bestehen, tragen ebenfalls dazu bei, dass kein hier hochfrequenter Ultraschall von der Baueinheit 8 in den Boden 6 eingetragen wird.

Da der Pneumatikzylinder 18 im Betrieb ein innerhalb eines Pneumatikzylindergehäuses geführten und durch Druckluft belasteten Kolben 22 aufweist, stellt diese Druckluft als Luftkissen 33 ein Dämpfungselement in Bezug auf den Körperschall dar, welcher von dem Vibrationserreger 10 in die Baueinheit 8 emittiert wird.

Weiterhin kann die Einspannstellung der Baueinheit 8 bzw. der Spanneinrichtung 29 durch die Steuerung auch hier beispielsweise vertikal derart eingestellt werden, dass zwischen einem am unteren Rand der Baubehälter-Seitenwandung 32 angeordneten inneren Anschlagflansch 20 und dem Behälter-Boden 30 noch ein lichter Spalt 34 vorhanden ist, welcher eine Übertragung von Körperschall auf die Baubehälter-Seitenwandung 32 be- oder verhindert
Diese Maßnahmen tragen ebenfalls zu einer Konzentration des Körperschalls in dem Baubehälter-Boden 30 und damit in dem Objekt 9 bei.

**Fig. 3** und **Fig. 6** zeigen die Entpulverungsvorrichtung 100 von **Fig. 1** in einer Situation, in welcher der in dem Aufnahmekorb 24 aufgenommene und durch den in der Arbeitsstellung befindlichen Deckel 3 an seiner Behälteröffnung 15 verschlossene Baubehälter 1 durch die Schwenkvorrichtung 2 um die zweite Schwenkachse 26 derart verschwenkt wird, dass die Behälteröffnung 15 im Wesentlichen nach unten, d.h. in Schwerkraftrichtung weist. Im Wesentlichen nach unten weisend bedeutet, dass von einer rein vertikalen Lage auch gewisse Abweichungen bestehen können, solange eine Schwerkraftkomponente auf das pulverförmige Aufbaumaterial wirken kann.

Beispielsweise schwenkt die Schwenkvorrichtung 2 die Aufnahmevorrichtung 16 mit dem darin aufgenommenen Baubehälter 1 aus der in **Fig. 1** gezeigten aufrechten und insbesondere vertikalen Lage, in der die Behälteröffnung 15 des Baubehälters 1 im Wesentlichen nach oben weist, bevorzugt um 180° in die Kopf- oder Entleerungslage, in welcher die Behälteröffnung 15 des Baubehälters 1 dann im Wesentlichen nach unten, d.h. in Richtung der Wirkung der Schwerkraft weist. Infolge des Schwenkens des Baubehälters 1 in die Kopflage löst sich wenigstens ein Teil des unverfestigt verbliebenen Aufbaumaterials 11 von dem Objekt 9 und fließt dann in Richtung der Austrittsöffnung 21 des Deckels 3, die durch einen von der elektronischen Steuerung koordiniert gesteuerten Aktuator geöffnet und verschlossen werden kann.

Parallel zum Verschwenken der Aufnahmeeinrichtung 16 oder davor oder auch danach kann der Vibrationserzeuger 10 aktiviert werden, um durch die oben beschriebene Erregung des Objekts 9 durch Körperschall das Ablösen von unverfestigt verbliebenem Aufbaumaterial von dem Objekt 9 bzw. aus Kanälen und Öffnungen des Objekts 9 zu verstärken bzw. überhaupt erst zu ermöglichen. Bei geöffneter Austrittsöffnung 21 des Deckels 3 kann das abgelöste Aufbaumaterial dann in die Auspackkammer 4 und von dort über eine Ablassöffnung 12 in einen Sammelbehälter zur Wiederverwendung abfließen. Auch könnte das unverfestigt verbliebene Aufbaumaterial über die Austritteöffnung 21 des Deckels 3 direkt abgesaugt werden. Nach dem Entpulvern des Objekts 9 und bevorzugt ausgehend von der Situation, in welcher sich der Baubehälter 1 in der aufrechten Lage von **Fig. 1** befindet, wird dann der Baubehälter 1 aus der Entpulverungsvorrichtung 100 entladen.

### Bezugszahlenliste

- 100: Auspackvorrichtung
- 1: Baubehälter
- 2: Schwenkvorrichtung
- 3: Deckel
- 4: Auspackkammer
- 5: Rollladen
- 6: Boden
- 7: Andockplatte
- 8: Baueinheit
- 9: Objekt
- 10: Vibrationserzeuger
- 11: Bauplattform
- 12: Ablassöffnung
- 13: Durchgangsöffnungen
- 14: Pfeile
- 15: Behälteröffnung
- 16: Aufnahmeeinrichtung
- 17: Spannzylinder
- 18: Pneumatikzylinder
- 19: Deckelboden
- 20: Anschlagflansch
- 21: Austrittsöffnung
- 22: Kolben
- 23: Pfeil
- 24: Aufnahmekorb
- 25: Spannzapfen
- 26: erste Schwenkachse
- 27: zweite Schwenkachse
- 28: Schwingungsentkopplungsmittel
- 29: Spanneinrichtung
- 30: Baubehälter-Boden
- 31: Spannöffnungen
- 32: Baubehälter-Seitenwandung
- 33: Luftkissen
- 34: Spalt

## Patentansprüche

1. Entpulverungsvorrichtung (100) zum Entpulvern wenigstens eines dreidimensionalen, durch schichtweises Aufbringen und selektives Verfestigen eines pulverförmigen Aufbaumaterials im Rahmen eines Bauprozesses innerhalb eines topfförmigen Baubehälters (1) entstandenen Objekts (9) von unverfestigt verbliebenem Aufbaumaterial, wobei der Baubehälter (1) eine Baubehälter-Seitenwandung (32), eine Behälteröffnung (15) und einen innerhalb einer Baubehälter-Seitenwandung (32) beweglichen Baubehälter-Boden (30) aufweist, der abhängig vom Baufortschritt eine bestimmte Lage innerhalb der Baubehälter-Seitenwandung (32) einnimmt, wobei die Entpulverungsvorrichtung (100) wenigstens Folgendes umfasst:
a) eine zur Aufnahme des Baubehälters (1) ausgebildete und eingerichtete Aufnahmeeinrichtung (16),
b) eine mit der Aufnahmeeinrichtung (16) derart zusammenwirkende Schwenkvorrichtung (2), dass die Aufnahmeeinrichtung (16) durch die Schwenkvorrichtung (2) um wenigstens eine Achse (27) schwenkbar ist,
c) eine Spanneinrichtung (19) mit wenigstens einem Spannelement (17, 31) zum Spannen des Baubehälters (1) an oder in der Aufnahmeeinrichtung (16), wobei
d) die Spanneinrichtung (19) ausgebildet und eingerichtet ist, um in einer Einspannstellung von dem Baubehälter (1) insbesondere ausschließlich den Baubehälter-Boden (30) an dem wenigstens einem Spannelement (17, 31) durch Körperkontakt des wenigstens einen Spannelements (17, 31) mit dem Baubehälter-Boden (30) zu spannen und um in einer Entspannstellung den Baubehälter-Boden (30) von dem wenigstens einem Spannelement (17, 31) zu entspannen, **dadurch gekennzeichnet, dass**
e) wenigstens ein, mit dem wenigstens einem Spannelement (17, 31) der Spanneinrichtung (19) durch direkten oder indirekten Körperkontakt derart verbundener Vibrationserzeuger (10) vorgesehen ist, dass von dem Vibrationserzeuger (10) erzeugte Schwingungen und/oder von dem Vibrationserzeuger (10) erzeugtes Klopfen auf das wenigstens eine Spannelement (17, 31) mittels Körperschallleitung übertragen werden.

2. Entpulverungsvorrichtung nach Anspruch 1, **dadurch gekennzeichnet, dass** die Aufnahmeeinrichtung (16) einen Aufnahmekorb (24) zur Aufnahme des Baubehälters (1) und einen Boden (6) aufweist, wobei der Aufnahmekorb (24) mit einer Seite des Bodens (6) verbunden und die Spanneinrichtung (19) im Wesentlichen auf der anderen, von der einen Seite wegweisenden Seite des Bodens (6) angeordnet ist.

3. Entpulverungsvorrichtung nach Anspruch 2, **dadurch gekennzeichnet, dass** der Boden (6) wenigstens eine Durchgangsöffnung (13) aufweist, durch welche das wenigstens eine Spannelement (17, 31) wenigstens in der Einspannstellung ragt, um den Baubehälter-Boden (30) durch Körperkontakt spannen zu können.

4. Entpulverungsvorrichtung nach Anspruch 3 **dadurch gekennzeichnet, dass** das wenigstens eine Spannelement (17, 31) die wenigstens eine Durchgangsöffnung (13) des Bodens (6) kontaktlos durchragt.

5. Entpulverungsvorrichtung nach einem der Ansprüche 2 bis 4, **dadurch gekennzeichnet, dass** die Spanneinrichtung (19) eine durch wenigstens einen Aktuator (18) relativ zu dem Boden (6) bewegliche Baueinheit (8) darstellt, an oder in welcher der wenigstens den Vibrationserzeuger (10) und das wenigstens eine Spannelement (17, 31) miteinander körperschalleitend in Verbindung stehen.

6. Entpulverungsvorrichtung nach Anspruch 5, **dadurch gekennzeichnet, dass** der Aktuator (18) wenigstens einen Pneumatikzylinder umfasst.

7. Entpulverungsvorrichtung nach Anspruch 5 oder 6, **dadurch gekennzeichnet, dass** die Baueinheit (8) weiterhin eine Montageplatte (7) umfasst, auf welcher wenigstes der Vibrationserzeuger (10) und das wenigstens eine Spannelement (17, 31) angeordnet sind.

8. Entpulverungsvorrichtung nach Anspruch 7, **dadurch gekennzeichnet, dass** auf der Montageplatte (7) weiterhin Schwingungsentkopplungsmittel (28) derart angeordnet sind, dass sie zu dem Boden (6) weisen.

9. Entpulverungsvorrichtung nach einem der Ansprüche 5 bis 8, **dadurch gekennzeichnet, dass** der Aktuator (10) durch eine Steuerung derart gesteuert ist, dass der Aktuator (10) die Baueinheit (8) zwischen einer an den Boden (6) angenäherten ersten Lage, in welcher das wenigstens eine Spannelement (17, 31) die Einspannstellung einnehmen kann oder zum Einnehmen der Einspannstellung oder der Entspanntstellung bereit ist, und einer von dem Boden (6) entfernten zweiten Lage bewegen kann, in welcher das wenigstens eine Spannelement (17, 31) die Entspannstellung einnimmt oder die Entspannstellung einnehmen kann.

10. Entpulverungsvorrichtung nach den Ansprüchen 8 und 9, **dadurch gekennzeichnet, dass** wenn die Baueinheit (8) in die an den Boden (6) angenäherte erste Lage gesteuert ist, die Schwingungsentkopplungsmittel (28) in Kontakt mit der anderen Seite des Bodens (6) treten.

11. Entpulverungsvorrichtung nach einem der vorhergehenden Ansprüche, **dadurch gekennzeichnet, dass** der Vibrationserzeuger (10) durch eine Steuerung derart gesteuert ist, dass er wenigstens in der Einspannstellung des wenigstens einen Spannelements (17, 31) aktiviert wird, um die Schwingungen auf das wenigstens eine Spannelement (17, 31) als Körperschall zu übertragen.

12. Entpulverungsvorrichtung nach einem der vorhergehenden Ansprüche, **dadurch gekennzeichnet, dass** der Vibrationserzeuger (10) Schwingungen im Ultraschallbereich erzeugt.

13. Entpulverungsvorrichtung nach einem der vorhergehenden Ansprüche, **dadurch gekennzeichnet, dass** sie eine insbesondere pulverdichte Entpulverungskammer (4) umfasst, in welcher die Aufnahmeeinrichtung (16) angeordnet ist.

14. Entpulverungsvorrichtung nach einem der Ansprüche 2 bis 13, **dadurch gekennzeichnet, dass** Die Aufnahmeeinrichtung (16) einen an dem Aufnahmekorb (24) beweglich gelagerten Deckel (3) aufweist, wobei in einer abgehobenen Stellung des Deckels (3) der Baubehälter (1) in dem Aufnahmekorb (24) in einer im Wesentlichen aufrechten Lage aufgenommen ist, in welcher die Behälteröffnung (15) im Wesentlichen nach oben weist, und aus dem Aufnahmekorb (24) entnommen werden kann, und in einer abgesenkten Stellung des Deckels (3) die Behälteröffnung (15) des Baubehälters (1) und/oder eine Öffnung des Aufnahmekorbs (24) verschlossen werden kann.

15. Entpulverungsvorrichtung nach einem der vorhergehenden Ansprüche, **dadurch gekennzeichnet, dass** die Schwenkvorrichtung (2) derart ausgebildet und durch eine Steuerung derart gesteuert ist, dass die Aufnahmevorrichtung (16) zwischen einer für ein Be- und Entladen des Baubehälters (1) vorgesehenen Be- und Entladestellung, in welcher der Deckel (3) im Wesentlichen nach oben weist, und einer für ein Entleeren des Baubehälters (1) von unverfestigtem Pulver vorgesehenen Entleerungsstellung, in welcher der Deckel (3) im Wesentlichen nach unten in Richtung Schwerkraft weist, wenigstens einmal um die wenigstens eine Achse (27) schwenkbar ist.

## Claims

1. Depowdering device (100) for depowdering at least one three-dimensional object (9) of unconsolidated residual construction material formed by the layerwise application and selective solidification of a powdery construction material inside a potshaped construction container (1) during a construction process, wherein the construction container (1) has a construction container side wall (32), a container opening (15) and a construction container base (30) which can be moved within a construction container side wall (32), which adopts a specific position inside the construction container side wall (32) depending on the progress of construction, wherein the depowdering device (100) comprises at least the following:
a) a receiving device (16) configured and set up to receive the construction container (1),
b) a pivoting device (2) cooperating with the receiving device (16) in such a way that the receiving device (16) can be pivoted about at least one axis (27) by the pivoting device (2),
c) a tensioning device (19) with at least one tensioning element (17, 31) for tensioning the construction container (1) on or in the receiving device (16), wherein
d) the tensioning device (19) is configured and set up, in order, in a tensioned position of the construction container (1), to tension, in particular exclusively, the construction container base (30) on the at least one tensioning element (17, 31) by physical contact of the at least one tensioning element (17, 31) with the construction container base (30), and in order, in a untensioned position, to release the construction container base (30) from the at least one tensioning element (17, 31), **characterized in that**
e) at least one vibration generator (10) connected to the at least one tensioning element (17, 31) of the tensioning device (19) by direct or indirect physical contact is provided in such a way that vibrations generated by the vibration generator (10) and/or knocking generated by the vibration generator (10) are transmitted to the at least one tensioning element (17, 31) by means of structure-borne sound conduction.

2. Depowdering device according to claim 1, **characterized in that** the receiving device (16) has a receiving basket (24) for receiving the construction container (1) and a base (6), wherein the receiving basket (24) is connected to one side of the base (6) and the tensioning device (19) is arranged essentially on the other side of the base (6) facing away from the one side.

3. Depowdering device according to claim 2, **characterized in that** the base (6) has at least one through-opening (13) through which the at least one tensioning element (17, 31) projects at least in the tensioned position in order to be able to tension the construction container base (30) through physical contact.

4. Depowdering device according to claim 3 **characterized in that** the at least one tensioning element (17, 31) projects through the at least one through-opening (13) of the base (6) without making contact.

5. Depowdering device according to any one of claims 2 to 4, **characterized in that** the tensioning device (19) is a structural unit (8) which is movable relative to the base (6) by at least one actuator (18) and on or in which the at least one vibration generator (10) and the at least one tensioning element (17, 31) are connected to one another in a structure-borne sound-conducting manner.

6. Depowdering device according to claim 5, **characterized in that** the actuator (18) comprises at least one pneumatic cylinder.

7. Depowdering device according to claim 5 or 6, **characterized in that** the structural unit (8) further comprises a mounting plate (7) on which at least the vibration generator (10) and the at least one tensioning element (17, 31) are arranged.

8. Depowdering device according to claim 7, **characterized in that** vibration decoupling means (28) are further arranged on the mounting plate (7) in such a way that they point towards the floor (6).

9. Depowdering device according to any one of claims 5 to 8, **characterized in that** the actuator (10) is controlled by a controller in such a way that the actuator (10) moves the structural unit (8) between a first position closer to the base (6), in which the at least one tensioning element (17, 31) can adopt the tensioned position or is ready to adopt the tensioned position or the untensioned position, and a second position remote from the base (6), in which the at least one tensioning element (17, 31) adopts the untensioned position or can assume the untensioned position.

10. Depowdering device according to claims 8 and 9, **characterized in that** when the structural unit (8) is moved into the first position close to the base (6), the vibration decoupling means (28) come into contact with the other side of the base (6).

11. Depowdering device according to any one of the preceding claims, **characterized in that** the vibration generator (10) is controlled by a controller in such a way that it is activated at least in the tensioned position of the at least one tensioning element (17, 31) in order to transmit the vibrations to the at least one tensioning element (17, 31) as structure-borne sound.

12. Depowdering device according to any one of the preceding claims, **characterized in that** the vibration generator (10) generates vibrations in the ultrasonic range.

13. Depowdering device according to any one of the preceding claims, **characterized in that** it comprises a particularly powder-dense depowdering chamber (4) in which the receiving device (16) is arranged.

14. Depowdering device according to any one of claims 2 to 13, **characterized in that** the receiving device (16) has a lid (3) mounted movably on the receiving basket (24), wherein in a lifted position of the lid (3) the construction container (1) is received in the receiving basket (24) in a substantially upright position, in which the container opening (15) points substantially upwards and can be removed from the receiving basket (24), and in a lowered position of the lid (3) the container opening (15) of the construction container (1) and/or an opening of the receiving basket (24) can be closed.

15. Depowdering device according to any one of the preceding claims, **characterized in that** the pivoting device (2) is configured and controlled by a controller in such a way that the receiving device (16) can be moved between a loading and unloading position provided for loading and unloading the construction container (1), in which the lid (3) points substantially upwards, and an emptying position provided for emptying the construction container (1) of unconsolidated powder, in which the lid (3) points substantially downwards in the direction of gravity, can be pivoted at least once about the at least one axis (27).

## Revendications

1. Dispositif de dépoudrage (100) destiné au dépoudrage d'au moins un objet tridimensionnel (9) de matériau de construction résiduel non consolidé, produit par application par couches et consolidation sélective d'un matériau pulvérulent de construction dans le cadre d'un processus de construction à l'intérieur d'un récipient de construction (1) en forme de pot, dans lequel le récipient de construction (1) présente une paroi latérale (32) de récipient de construction, une ouverture (15) de récipient et un plateau mobile (30) de récipient de construction à l'intérieur d'une paroi latérale (32) de récipient de construction, qui occupe en fonction de la progression de construction un emplacement déterminé à l'intérieur de la paroi latérale (32) de récipient de construction, dans lequel le dispositif de dépoudrage (100) comprend au moins ce qui suit :
a) un dispositif de réception (16) conçu et configuré pour la réception du récipient de construction (1),
b) un dispositif de pivotement (2) coopérant avec le dispositif de réception (16) de telle façon que le dispositif de réception (16) peut être pivoté autour d'au moins un axe (27) par le dispositif de pivotement (2),
c) un dispositif de serrage (19) comportant au moins un élément de serrage (17, 31), destiné au serrage du récipient de construction (1) sur ou dans le dispositif de réception (16), dans lequel
d) le dispositif de serrage (19) est conçu et configuré pour, dans une position de fixation du récipient de construction (1), serrer en particulier exclusivement le plateau (30) de récipient de construction sur ledit au moins un élément de serrage (17, 31) par contact physique dudit au moins un élément de serrage (17, 31) avec le plateau (30) de récipient de construction et pour, dans une position de desserrage, libérer le plateau (30) de récipient de construction dudit au moins un élément de serrage (17, 31), **caractérisé en ce que**
e) au moins un générateur de vibrations (10) relié audit au moins un élément de serrage (17, 31) du dispositif de serrage (19) par contact physique direct ou indirect est prévu, de sorte que des vibrations produites par le générateur de vibrations (10) et/ou un battement produit par le générateur de vibrations (10) est/sont transmis(es) audit au moins un élément de serrage (17, 31) par conduction de son solidien.

2. Dispositif de dépoudrage selon la revendication 1, **caractérisé en ce que** le dispositif de réception (16) présente un panier de réception (24) destiné à la réception du récipient de construction (1) et un plateau (6), dans lequel le panier de réception (24) est relié à un côté du plateau (6), et le dispositif de serrage (19) est disposé essentiellement sur l'autre côté du plateau (6), éloigné dudit un côté.

3. Dispositif de dépoudrage selon la revendication 2, **caractérisé en ce que** le plateau (6) présente au moins une ouverture de passage (13) à travers laquelle ledit au moins un élément de serrage (17, 31) s'élève au moins dans la position de serrage afin de pouvoir serrer par contact physique le plateau (30) de récipient de construction.

4. Dispositif de dépoudrage selon la revendication 3, **caractérisé en ce que** ledit au moins un élément de serrage (17, 31) s'élève sans contact à travers ladite au moins une ouverture de passage (13) du plateau (6).

5. Dispositif de dépoudrage selon l'une quelconque des revendications 2 à 4, **caractérisé en ce que** le dispositif de serrage (19) représente un module (8) mobile par rapport au plateau (6) au moyen d'au moins un actionneur (18), module sur ou dans lequel ledit au moins un générateur de vibrations (10) et ledit au moins un élément de serrage (17, 31) sont reliés l'un à l'autre en conduisant le bruit solidien.

6. Dispositif de dépoudrage selon la revendication 5, **caractérisé en ce que** l'actionneur (18) comprend au moins un vérin pneumatique.

7. Dispositif de dépoudrage selon la revendication 5 ou 6, **caractérisé en ce que** le module (8) comprend en outre une plaque de montage (7), sur laquelle sont disposés au moins le générateur de vibrations (10) et ledit au moins un élément de serrage (17, 31).

8. Dispositif de dépoudrage selon la revendication 7, **caractérisé en ce que** des moyens de neutralisation de vibrations (28) sont en outre disposés sur la plaque de montage (7) de telle façon qu'ils sont orientés vers le plateau (6).

9. Dispositif de dépoudrage selon l'une quelconque des revendications 5 à 8, **caractérisé en ce que** l'actionneur (10) est commandé par un dispositif de commande de sorte que l'actionneur (10) peut mouvoir le module (8) entre un premier emplacement rapproché du plateau (6) dans lequel ledit au moins un élément de serrage (17, 31) peut occuper la position de serrage ou est prêt à l'adoption de la position de serrage ou de la position de desserrage, et un second emplacement éloigné du plateau (6) dans lequel ledit au moins un élément de serrage (17, 31) occupe la position de desserrage ou peut occuper la position de desserrage.

10. Dispositif de dépoudrage selon les revendications 8 et 9, **caractérisé en ce que** lorsque le module (8) est amené dans le premier emplacement rapproché du plateau (6), les moyens de neutralisation de vibrations (28) entrent en contact avec l'autre côté du plateau (6).

11. Dispositif de dépoudrage selon l'une quelconque des revendications précédentes, **caractérisé en ce que** le générateur de vibrations (10) est commandé par un dispositif de commande de sorte qu'il est activé au moins dans la position de serrage dudit au moins un élément de serrage (17, 31) afin de transmettre les vibrations audit au moins un élément de serrage (17, 31) sous forme de bruit solidien.

12. Dispositif de dépoudrage selon l'une quelconque des revendications précédentes, **caractérisé en ce que** le générateur de vibrations (10) produit des vibrations dans le domaine des ultrasons.

13. Dispositif de dépoudrage selon l'une quelconque des revendications précédentes, **caractérisé en ce qu'**il comprend une chambre de dépoudrage (4), en particulier étanche aux poudres, dans laquelle est disposé le dispositif de réception (16).

14. Dispositif de dépoudrage selon l'une quelconque des revendications 2 à 13, **caractérisé en ce que** le dispositif de réception (16) présente un couvercle (3) placé de façon mobile sur le panier de réception (24), dans lequel, dans une position relevée du couvercle (3), le récipient de construction (1) est reçu dans le panier de réception (24) en une position sensiblement verticale, dans laquelle l'ouverture (15) de récipient est orientée sensiblement vers le haut, et peut être retiré du panier de réception (24), et dans une position abaissée du couvercle (3), l'ouverture (15) de récipient du récipient de construction (1) et/ou une ouverture du panier de réception (24) peu(ven)t être fermée(s).

15. Dispositif de dépoudrage selon l'une quelconque des revendications précédentes, **caractérisé en ce que** le dispositif de pivotement (2) est conçu de façon telle et commandé de façon telle par un dispositif de commande que le dispositif de réception (16) est pivotable au moins une fois autour dudit au moins un axe (27) entre une position de chargement et déchargement prévue pour charger et décharger le récipient de construction (1), dans laquelle le couvercle (3) est orienté sensiblement vers le haut, et une position de vidage prévue pour vider le récipient de construction (1) de la poudre non consolidée, dans laquelle le couvercle (3) est orienté sensiblement vers le bas en direction de la force de pesanteur.
